# EUROPÄISCHE PATENTSCHRIFT

(11) **EP 1 504 701 B1**
(45) Veröffentlichungstag und Bekanntmachung des Hinweises auf die Patenterteilung: **14.11.2007**
(21) Anmeldenummer: 04014991.6
(22) Anmeldetag: 25.06.2004
(51) Int. Cl.: A47J 27/21

(54) **Elektrisch beheizbares Kochgeschirr und Verfahren zu dessen Montage**
Electrically heatable cooking utensil and method for assembling it
Récipient de cuisson électriquement chauffable et procédé d'assemblage d'un tel récipient

(30) Priorität: 05.08.2003 DE 10335826
(43) Veröffentlichungstag der Anmeldung: 09.02.2005
(73) Patentinhaber: BSH Bosch und Siemens Hausgeräte GmbH, 81739 München (DE)
(72) Erfinder: Kramer, Siegmund, 83417 Kirchanschöring (DE); Mühlbacher, Richard, 83224 Grassau (DE); Steffl, Michael, 83250 Marquartstein (DE)

(56) Entgegenhaltungen:
- GB-A- 2 330 064
- GB-A- 2 344 506
- US-A- 5 908 570

## Beschreibung

Die vorliegende Erfindung betrifft ein elektrisch beheizbares Kochgeschirr gemäß Oberbegriff des Patentanspruchs 1

Bei elektrisch beheizbaren Kochgeschirren, insbesondere bei elektrisch beheizbaren Kannen aus Kunststoff dehnt sich während eines Betriebs eines Heizelements die Kunststoffkanne auf Grund des relativ hohen Wärmeausdehnungskoeffiziens des Kunststoffes um einen gewissen Betrag aus. Bei einem in einer zylindrischen Innenwand der Kunststoffkanne befestigten Heizmodul besteht bei dessen Betrieb die Gefahr, dass sich die Verbindung zwischen Heizmodul und Innenwand der Kunststoffkanne auf Grund der Wärmeausdehnung lockert. Eine Abdichtung des Innenraums der Kanne kann in diesem Fall nicht mehr zuverlässig gewährleistet werden. Aus diesem Grund werden bei bekannten elektrisch beheizbaren Kochgeschirren die Heizmodule mittels zusätzlicher Einrichtungen innerhalb des Kochgefäßes gesichert, bspw. mittels eines Sprengrings o. dgl (vgl. GB-A-2 330 064 bzw. EP 1 021 117 B1).

Die WO 01/93732 A1 zeigt einen elektrisch beheizbaren Kessel, bei dem ein Heizmodul an einer zylindrischen Innenwand einer Kanne befestigt ist und bei dem an der Außenseite der Kanne ein metallischer Dekorring angeordnet ist, der sowohl am Außenbereich der Kanne als auch in einer ringförmigen Nut eines Gefäßbodens gehalten ist. Bei einer wärmebedingten Ausdehnung der Kanne besteht die Gefahr, dass das an der Innenmantelfläche befestigte Heizmodul sich lockert.

Ein weiteres elektrisch beheizbares Kochgeschirr ist aus der EP 0 700 654 B1 bekannt. Hierbei ist eine Heizeinrichtung stoffschlüssig mit einem Kochgefäß verbunden. An einem Außenumfang des Kochgefäßes ist ein Dekorring aus Metall angeordnet.

Eine Aufgabe der vorliegenden Erfindung besteht darin, ein elektrisch beheizbares Kochgeschirr aus Kunststoff zur Verfügung zu stellen, bei dem eine sichere Verbindung zwischen Kunststoffkanne und Heizmodul jederzeit gewährleistet ist.

Diese Aufgabe wird mit dem Gegenstand der unabhängigen Patentansprüche erreicht. Merkmale vorteilhafter Weiterbildungen ergeben sich aus den jeweiligen abhängigen Ansprüchen.

Bei einem elektrisch beheizbaren Kochgeschirr mit einem Kochgefäß aus Kunststoff mit den Merkmalen des Patentanspruchs 1 ist erfindungsgemäß vorgesehen, dass ein Abdeckring zumindest mit Teilen seiner Innenmantelfläche auf einer Außenmantelfläche des Kochgefäßes anliegt und bei aktivierter Heizeinrichtung kraftschlüssig mit dieser verbunden ist. Bei kaltem Kochgefäß und abgeschalteter Heizeinrichtung ist dagegen vorzugsweise ein geringfügiges Radialspiel zwischen Abdeckring und Außenmantelfläche des Kochgefäßes vorgesehen. Auf diese Weise kann verhindert werden, dass der Abdeckring das Kochgefäß bei aktivierter Heizeinrichtung zu stark unter Spannung setzt, wodurch bei empfindlichen Materialien nach länger andauerndem Betrieb unter Umständen Spannungsrisse oder -brüche entstehen können. Bei einem Kochgefäß, das bspw. aus Polycarbonat besteht, tritt diese Gefahr auf, da dieser Kunststoff zwar relativ wärmebeständig und damit für den Einsatzzweck geeignet ist, jedoch gleichzeitig eine ausgeprägte Sprödigkeit und Kerbschlagempfindlichkeit aufweist. Die Fixierung des Abdeckrings am Außenumfang des Kochgefäßes erfolgt zweckmäßigerweise durch den von unten angesetzten und mit dem Kochgefäß verbindbaren Gefäßboden.

Vorzugsweise ist der Abdeckring ungefähr in gleicher Höhe wie der Gefäßboden angeordnet, so dass bei einer wärmebedingten Ausdehnung des Kochgefäßes der Abdeckring fest an der Außenmantelfläche des Kochgefäßes gehalten wird, wodurch das Radialspiel gegenüber dem kalten Zustand auf Null reduziert wird. Der Abdeckring besteht aus Metallblech, beispielsweise aus Edelstahlblech oder aus Aluminiumblech. Hierdurch wird gewährleistet, dass der Wärmeausdehnungskoeffizient des Abdeckrings wesentlich geringer ist als der des Kochgefäßes aus Kunststoff, wodurch bei dessen Erwärmung eine Wegbegrenzung bzw. feste Fixierung auf Grund des fest verspannten Metallrings gewährleistet werden kann.

Das erfindungsgemäße Kochgeschirr weist den Vorteil auf, dass die Heizeinrichtung in einer weitgehend zylindrischen Innenmantelfläche des Kochgefäßes einfach montierbar ist, ohne dass zusätzliche Sicherungsmaßnahmen notwendig werden. Dies reduziert den Montage und Herstellungsaufwand, da keine Absätze oder Sicherungsringe o. dgl. an der Innenseite des Kochgefäßes vorgesehen werden müssen.

Der Abdeckring ist ein geschlossener Ring. Dieser kann beispielsweise durch einfaches Aufschieben ohne vorhergehendes Erwärmen am Außenumfang der Kanne angebracht werden. Alternativ kann der Abdeckring auch ein offener Ring sein, der eine Stoßstelle am Umfang hat, die im montierten Zustand mittels Spann- oder Verschlusseinrichtungen zusammengehalten wird.

Kochgefäß und Abdeckring reduziert sich bei aktivierter Heizeinrichtung und entsprechend erwärmtem Kochgefäß auf Null, wobei die Maße vorzugsweise so berechnet sind, dass der Abdeckring keine nennenswerte Radialspannung auf das Kochgefäß ausübt, so dass dieses nicht beschädigt werden kann.

Die Erfindung wird nachfolgend anhand eines bevorzugten Ausführungsbeispiels unter Bezugnahme der beiliegenden Zeichnungen näher erläutert. Dabei zeigt:
- Figur 1: eine schematische Perspektivansicht eines erfindungsgemäßen, elektrisch beheizbaren Kochgeschirrs,
- Figur 2: eine Detailansicht einer Verbindungsstelle zwischen einem Abdeckring und einem Kochgefäß aus Kunststoff und
- Figur 3: eine Ausführungsform des Abdeckrings.

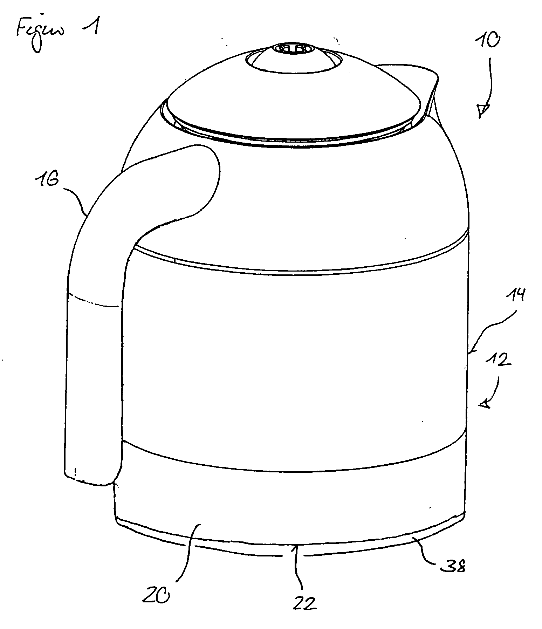

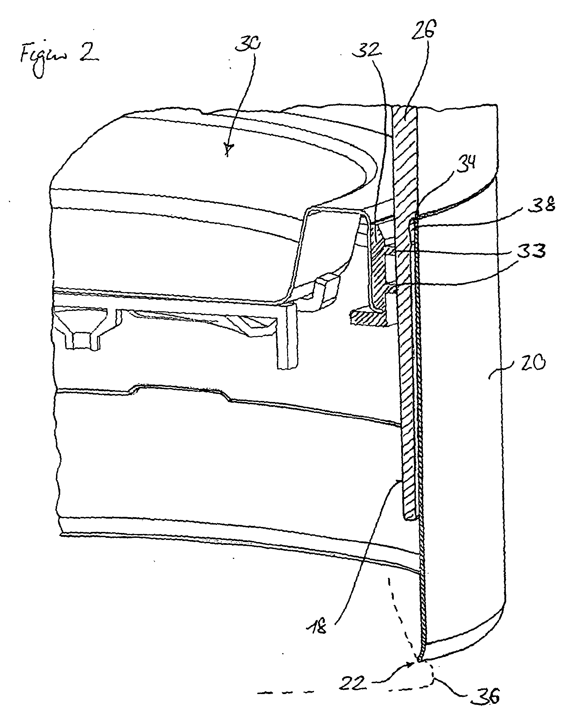

Figur 1 zeigt eine perspektivische Ansicht eines elektrisch beheizbaren Kochgefäßes 10, das vorzugsweise aus Kunststoff besteht, und das zumindest in einem unteren Bereich 12 eine weitgehend zylindrische Außenmantelfläche 14 aufweist. Ein Griff 16 dient zur Handhabung des Kochgefäßes 10 und kann auf verschiedener Weise ausgestaltet und an der Außenmantelfläche befestigt sein, beispielsweise in der gezeigten Form. Am unteren Bereich 12 des Kochgefäßes 10 ist weiterhin ein Abdeckring 20 erkennbar, der an der Außenmantelfläche 14 des Kochgefäßes angeordnet und mittels eines am Kochgefäß befestigten Gefäßbodens 36 fixiert ist. Der Gefäßboden 36 bildet somit im gezeigten Ausführungsbeispiel einen Teil eines Fußes für das Kochgefäß 10. Eine untere Kante 22 des Abdeckrings 20 wird somit vom Gefäßboden 36 gehalten. Das Kochgefäß 10 liegt im auf einer Ablage abgesetzten Zustand auf dem Gefäßboden 36 auf. Die Außenfläche des Abdeckrings 20 schließt im gezeigten Ausführungsbeispiel bündig mit der Außenmantelfläche 14 des Kochgefäßes 10 ab, was anhand der Figur 2 noch eingehender verdeutlicht ist.

Figur 2 zeigt in einem perspektivischen Detailschnitt den unteren Bereich 12 des Kochgefäßes 10, wobei hier eine elektrische Heizeinrichtung 30 angedeutet ist, die über einen Dichtring 32 an der Innenmantelfläche 18 des Kochgefäßes befestigt ist. Der Dichtring 32 weist im gezeigten Ausführungsbeispiel zwei radiale Lamellen 33 an seinem Außenumfang auf, die sich beim Einschieben des Heizelements 30 von unten vorzugsweise leicht nach unten umbiegen und auf diese Weise einerseits für eine Fixierung der Heizeinrichtung 30 an der Innenmantelfläche 18 des Kochgefäßes 10 und andererseits für eine gute Abdichtung des Flüssigkeitsreservoirs oberhalb der Heizeinrichtung 30 nach unten sorgen. Bei einer wärmebedingten Ausdehnung der Heizeinrichtung 30 sorgt das Dichtelement 32 darüber hinaus für einen gewissen Toleranzausgleich, so dass kein unmittelbarer Druck auf die Wandung 26 des Kochgefäßes 10 ausgeübt wird.

Ein unterhalb der Heizeinrichtung 30 angeordneter und bspw. an der Innenmantelfläche 18 des Kochgefäßes 10 und/oder an der Heizeinrichtung 30 befestigter Gefäßboden 36 ist aus Gründen der besseren Übersichtlichkeit lediglich angedeutet. Bei einer Erwärmung der Heizeinrichtung 30 erwärmt sich auch das Kochgefäß 10. Da dieses aus Kunststoff besteht, kann es bei einer stärkeren Erwärmung zu einer gewissen radialen Ausdehnung kommen. Die sichere Verbindung zwischen Heizeinrichtung 30 und Innenmantelfläche 18 des Kochgefäßes 10 wird hierdurch nicht beeinträchtigt, da die elastischen Lamellen 33 für einen entsprechend festen Sitz sorgen.

Im kalten Zustand des Kochgefäßes 10 ist zwischen der Außenmantelfläche 14 und dem Abdeckring 20 ein radiales Spiel von ca. 0,2 bis 0,3 mm vorgesehen, das sich bei aktivierter Heizeinrichtung 30 und ggf. auf eine Betriebstemperatur von über 100 °C erwärmtem Kochgefäß 10 auf Null reduziert. Um evtl. Spannungsrisse oder -brüche des Kochgefäßes 10 zu vermeiden, werden die zueinander passenden Teile zweckmäßigerweise so bemessen, dass bei aufgeheiztem Kochgefäß 10 keinen nennenswerte Radialspannung durch den Abdeckring 20 ausgeübt wird. Insbesondere bei einem aus Polycarbonat o. dgl. bestehendem Kochgefäß 10 kann es ansonsten zu Beschädigungen aufgrund zu starker Radialspannung kommen.

Entsprechend Figur 2 kann die Außenmantelfläche 14 des Kochgefäßes 20 an ihrem äußeren Umfang ungefähr in Höhe der Heizeinrichtung 30 einen Absatz 34 aufweisen, an den eine obere Kante des Abdeckrings 20 bündig anschließt. Auf diese Weise ist einerseits die exakte Position des Abdeckrings 20 an der Außenmantelfläche 14 des Kochgefäßes 10 definiert. Zudem ist durch den bündigen Übergang zwischen den Außermantelflächen eine vorteilhafte optische Wirkung erreicht. An der oberen Kante des Absatzes 34 ist vorzugsweise ein Freistich 38 vorgesehen, so dass sich ein unter Umständen aus fertigungstechnischen Gründen vorhandener Grat am Abdeckring 20 nicht in die Außenmantelfläche 14 eindrücken kann. Ein solcher Grat von typischerweise ca. 0,1 mm Breite kann bspw. aus einem vorhergegangenen Laserschneidprozess herrühren. Aufgrund der ausgeprägten Kerbschlagempfindlichkeit des für das Kochgeschirr vorzugsweise verwendeten Polycarbonats kann bereits ein solch kleiner Grat zu optischen Beeinträchtigungen und/oder zu Beschädigungen führen.

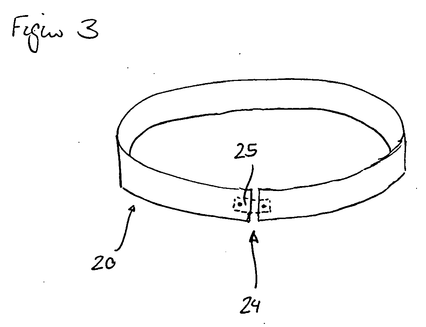

Der geschlossene Abdeckring 20 kann vorzugsweise mit geringem Spiel auf die Außenmantelfläche 14 des Kochgefäßes 10 aufgeschoben und anschließend mittels des Gefäßbodens 36 fixiert werden. Alternativ kann der Abdeckring 20 auch als offener Ring ausgebildet sein, wie dies anhand der Figur 3 angedeutet ist. Hierbei weist der Abdeckring 20 eine Stoßstelle 24 auf, an der Abdeckring 20 im montierten Zustand mittels einer Spann- oder Verschlusseinrichtung 25 am Kochgefäß gehalten ist.

Eine nicht dargestellte Alternative kann vorsehen, dass der Abdeckring 20 im kalten Zustand des Kochgeschirrs mittels erhabener Abschnitte auf der Außenmantelfläche 14 gehalten wird. Diese Abschnitt können bspw. als flache Stempel o. dgl. ausgestaltet sein, auf die der Abdeckring 20 unter leichtem Druck aufgeschoben werden kann. Diese erhabenen Abschnitte sind vorzugsweise in einem Bereich der Wandung 26 angebracht, in dem diese leicht nach innen verformt werden kann, ohne dass dies mit der Gefahr von Beschädigungen, Rissen oder optischen Beeinträchtigungen verbunden ist. Im Beispiel der Figur 2 sind diese erhabenen Abschnitte somit vorzugsweise am unteren Rand der Wandung 26 anzubringen, bei der diese ggf. die erwärmungsbedingte Radialausdehnung durch leichte Verformung nach innen ausgleichen kann. Um diese Verformung zu erleichtern, kann der untere Bereich der Wandung 26 ggf. über mehrere Schlitze verfügen, die für eine Entspannung des Kochgefäßes 10 sorgen können, wenn der Abdeckring 20 bei aktivierter Heizeinrichtung 30 eine Radialkraft auf die Außenmantelfläche 14 ausübt.

Wie weiterhin anhand der Figur 2 verdeutlicht ist, kann der Abdeckring 20 eine untere Kante des unten offenen Kochgefäßes 10 überragen, so dass die untere Kante 22 des Abdeckrings 20 gleichzeitig einen Auflagefuß des Kochgefäßes 10 bildet. An dieser unteren Kante 22 kann wahlweise eine Verdickung, ein aufgesetzter Gummiring oder eine andere ergänzende Einrichtung vorgesehen sein, um beispielsweise den Auflagefuß rutschfester zu machen. Typischerweise bildet jedoch der nur angedeutete Gefäßboden 36 den Auflagefuß für das Kochgeschirr, wie dies der Figur 1 entnommen werden kann.

## Patentansprüche

1. Elektrisch beheizbares Kochgeschirr, umfassend ein Kochgefäß (10) aus Kunststoff mit einem Gefäßboden (36), der eine elektrische Heizeinrichtung (30) aufweist und der über ein ringförmiges Dichtelement (32) form- und/oder kraftschlüssig in einem unteren Bereich (12) einer Innenmantelfläche (18) des Kochgefäßes (10) gehalten ist, und einen äußeren Abdeckring (20), der im unteren Bereich (12) einer Außenmantelfläche (14) des Kochgefäßes (10) angeordnet ist, und zumindest mit Abschnitten seiner Innenmantelfläche auf der Außenmantelfläche (14) des Kochgefäßes (10) anliegt
**dadurch gekennzeichnet, dass** der Abdeckring (20) ein geschlossener, aus Metallblech bestehender Ring ist, der
bei kaltem Kochgefäß (10) mittels an einem unteren Rand einer Wandung (26) angebrachter,erhabener Abschnitte an der Außenmantelfläche (14) des Kochgefäßes (10) gehalten ist oder
mittels des aufgesetzten Gefäßbodens (36) von diesem gehalten ist und
bei aktivierter elektrischer Heizeinrichtung (30) kraftschlüssig und spielfrei mit der Außenmantelfläche (14) verbunden ist.

2. Kochgeschirr nach Anspruch 1, **dadurch gekennzeichnet, dass** der Abdeckring (20) bei kaltem Kochgefäß (10) mit geringem Radialspiel an dessen Außenmantelfläche (14) anliegt.

3. Kochgeschirr nach Anspruch 2, **dadurch gekennzeichnet, dass** das Radialspiel bei kaltem Kochgefäß (10) und abgeschalteter Heizeinrichtung (30) zwischen ca. 0,1 mm und 0,5 mm beträgt.

4. Kochgeschirr nach einem der voranstehenden Ansprüche, **dadurch gekennzeichnet, dass** der Abdeckring (20) ungefähr in gleicher Höhe wie der Gefäßboden angeordnet ist.

5. Kochgeschirr nach einem der voranstehenden Ansprüche, **dadurch gekennzeichnet, dass** an der Außenmantelfläche (14) des Kochgefäßes (10) ein Absatz (34) vorgesehen ist, an den eine obere Kante des Abdeckrings (20) bündig anschließt.

6. Kochgeschirr nach einem der voranstehenden Ansprüche, **dadurch gekennzeichnet, dass** die Außenmantelflächen des oberen Bereichs des Kochgefäßes (10) und des Abdeckrings (20) miteinander fluchten.

7. Kochgeschirr nach Anspruch 5 oder 6, **dadurch gekennzeichnet, dass** der Absatz (34) an einem Bereich, an dem die obere Kante des Abdeckrings (20) anliegt, einen Freistich (38) aufweist.

## Claims

1. Electrically heatable cooking utensil, comprising a cooking vessel (10) of plastics material with a vessel base (36), which comprises an electric heating device (30) and which is held in shape-locking and/or force-locking manner in a lower region (12) of an inner circumferential surface (18) of the cooking vessel (10) by way of an annular sealing element (32), and an outer covering ring (20), which is arranged in the lower region (12) of an outer circumferential surface (14) of the cooking vessel (10) and which bears at least by sections of its inner circumferential surface on the outer circumferential surface (14) of the cooking vessel (10), **characterised in that** the cover ring (20) is a closed ring consisting of sheet metal, which when the cooking vessel (10) is cold is held against the outer circumferential surface (14) of the cooking vessel (10) by means of elevated sections integrally formed at a lower edge of a wall (26) or is held by means of the vessel base (36) when this is placed on and is connected in force-locking and play-free manner with the outer circumferential surface (14) when the electric heating device (30) is activated.

2. Cooking utensil according to claim 1, **characterised in that** the cover ring (20) bears with small radial play against the outer circumferential surface (14) of the cooking vessel (10) when this is cold.

3. Cooking utensil according to claim 2, **characterised in that** the radial play when cooking vessel (10) is cold and the heating device (30) is switched off is between approximately 0.1 millimetres and 0.5 millimetres.

4. Cooking utensil according to one of the preceding claims, **characterised in that** the cover ring (20) is arranged at approximately the same height as the vessel base.

5. Cooking utensil according to one of the preceding claims, **characterised in that** a projection (34) flushly adjoined by an upper edge of the cover ring (20) is provided at the outer circumferential surface (14) of the cooking vessel (10).

6. Cooking utensil according to one of the preceding claims, **characterised in that** the outer circumferential surfaces of the upper region of the cooking vessel (10) and the cover ring (20) are aligned with one another.

7. Cooking utensil according to claim 5 or 6, **characterised in that** the protrusion (34) has a groove (38) at a region against which the upper edge of the cover ring (20) bears.

## Revendications

1. Appareil de cuisson à chauffage électrique, qui comprend un récipient de cuisson (10) en matière synthétique doté d'un fond de récipient (36) qui présente un dispositif électrique de chauffage (30) et qui est maintenu en correspondance géométrique et/ou mécanique dans la partie inférieure (12) de la surface d'enveloppe intérieure (18) du récipient de cuisson (10) par l'intermédiaire d'un élément annulaire d'étanchéité (32), et un anneau extérieur de recouvrement (20) qui est disposé dans la partie inférieure (12) de la surface d'enveloppe extérieure (14) du récipient de cuisson (10) et qui repose au moins par des parties de sa surface d'enveloppe intérieure sur la surface de l'enveloppe extérieure (14) du récipient de cuisson (10),
**caractérisé en ce que** l'anneau de recouvrement (20) est un anneau fermé constitué d'une tôle métallique
qui est maintenu sur la surface d'enveloppe extérieure (14) du récipient de cuisson (10) au moyen de parties en relief ménagées sur le bord inférieur d'une paroi (26) lorsque le récipient de cuisson (10) est froid, ou
qui est maintenu au moyen du fond de récipient (36) posé et
qui, lorsque le dispositif de chauffage électrique (30) est activé, est relié en correspondance mécanique et sans jeu à la surface d'enveloppe (14).

2. Appareil de cuisson selon la revendication 1, **caractérisé en ce que** l'anneau de recouvrement (20) repose avec un petit jeu radial sur la surface d'enveloppe extérieure du récipient de cuisson (10) froid.

3. Appareil de cuisson selon la revendication 2, **caractérisé en ce que** lorsque le récipient de cuisson (10) est froid et le dispositif de chauffage (30) est débranché, le jeu radial est compris entre environ 0,1 mm et 0,5 mm.

4. Appareil de cuisson selon l'une des revendications précédentes, **caractérisé en ce que** l'anneau de recouvrement (20) est disposé sensiblement à même hauteur que le fond du récipient.

5. Appareil de cuisson selon l'une des revendications précédentes, **caractérisé en ce qu'**un palier (34) sur lequel le bord inférieur de l'anneau de recouvrement (20) se raccorde à chant est prévu sur la surface d'enveloppe extérieure (14) du récipient de cuisson (10).

6. Appareil de cuisson selon l'une des revendications précédentes, **caractérisé en ce que** les surfaces d'enveloppe extérieure de la partie supérieure du récipient de cuisson (10) et de l'anneau de recouvrement (20) affleurent l'une à l'autre.

7. Appareil de cuisson selon les revendications 5 ou 6, **caractérisé en ce que** le palier (34) présente une rainure de dégagement (38) dans une zone adjacente au bord supérieur de l'anneau de recouvrement (20).
